(19) Europäisches Patentamt

European Patent Office

Office européen des brevets

(11) EP 1 137 194 A2

(12) EUROPÄISCHE PATENTANMELDUNG

(43) Veröffentlichungstag:
26.09.2001 Patentblatt 2001/39

(51) Int Cl.7: H04B 3/54

(21) Anmeldenummer: 01107207.1

(22) Anmeldetag: 22.03.2001

(84) Benannte Vertragsstaaten:
AT BE CH CY DE DK ES FI FR GB GR IE IT LI LU
MC NL PT SE TR
Benannte Erstreckungsstaaten:
AL LT LV MK RO SI

(30) Priorität: 24.03.2000 DE 10014676

(71) Anmelder: PolyTrax Information Technology AG
81829 München (DE)

(72) Erfinder:
• Täger, Wolfgang, Dr.
81673 München (DE)
• Pohl, Stephan, Dipl., Ing.
26386 Wilhelmshaven (DE)
• Stöger, Mathias, Dipl., Ing.
81541 München (DE)

(74) Vertreter: Strehl Schübel-Hopf & Partner
Maximilianstrasse 54
80538 München (DE)

(54) Datenübertragung über Stromversorgungsnetz

(57) Bei der Datenübertragung zwischen zwei Geräten 11, 12 über das allgemeine Stromversorgungsnetz 13 wird eine Mehrträgertechnik verwendet, bei der der Übertragungskanal im Frequenzmultiplex in mehrere Teilkanäle unterteilt ist, denen jeweils eine Teilleistung als eigener Teil der gesamten Übertragungsleistung und eine Teilrate als eigene Datenrate zugewiesen wird.

Dabei wird allen Teilkanälen anfänglich die gleiche Teilleistung zugewiesen und ihr Signalrauschleistungsverhältnis geschätzt. Beginnend mit dem Teilkanal mit dem niedrigsten bis zum dem mit dem höchsten Signalrauschleistungsverhältnis werden dann für jeden Teilkanal die folgenden Schritte ausgeführt:

Die Teilrate wird, abhängig vom jeweiligen Signalrauschleistungsverhältnis, zunächst so zugewiesen, daß sich eine vorgegebene Übertragungsfehlerrate ergibt. Die so zugewiesene Teilrate wird auf einen ganzzahligen Werte quantisiert. Wenn die Quantisierung einem Abrunden entspricht, wird die anfänglich zugewiesene Teilleistung so verringert, daß die Übertragungsfehlerrate auf dem Wert vor der Quantisierung bleibt. Außerdem wird die Teilleistung anderer Teilkanäle mit höherem Signalrauschleistungsverhältnis so vergrößert, daß die Summe aller Teilleistungen konstant bleibt. Und die mit der Vergrößerung der Teilleistung einhergehende Erhöhung des Signalrauschleistungsverhältnisses wird berechnet, damit diesen Teilkanälen dann eine optimale Teilrate zugewiesen werden kann.

Dadurch wird die Datenrate des gesamten Übertragungskanals maximiert, während die Fehlerrate jedes Teilkanals und die Summe ihrer Teilleistungen gleich bleiben.

Fig. 1

**Beschreibung**

Die Erfindung betrifft ein Verfahren und eine Vorrichtung zur Datenübertragung über ein Stromversorgungsnetz.

Für die Datenübertragung über allgemeine Stromversorgungsnetze, beispielsweise das in Mitteleuropa übliche Niederspannungsnetz von 230V, gibt es verschiedene nationale und internationale Normen, die Beschränkungen auf bestimmte Frequenzbänder und Sendeleistungen festlegen. Um einen Übertragungskanal im Rahmen dieser Beschränkungen gut zu nutzen, wurde die Technik der Mehrträgerübertragung vorgeschlagen.

Bei der Mehrträgerübertragung wird ein Übertragungskanal in **N** voneinander unabhängige Teilkanäle unterteilt, die im allgemeinen die gleiche Bandbreite, also beispielsweise bei Frequenzmultiplextechnik den gleichen Frequenzabstand aufweisen. Der zu sendende Datenstrom wird in Teilströme aufgespalten und auf den Teilkanälen übertragen. Solche Mehrträgertechniken werden als "Discrete Multitone" DMT, "Multicarrier Modulation" MCM oder "Orthogonal Frequency Division Multiplexing" OFDM bezeichnet.

Die Mehrträgerübertragung über Stromversorgungsleitungen ist beispielsweise aus DE 19716011 A1 bekannt. Nach dieser Druckschrift wird der zu übertragende Datenstrom in parallele Teilströme aufgeteilt, die jeweils nach dem gleichen Modulationsschema auf den Teilkanälen übertragen werden. Außerdem wird dort dargelegt, daß auf derartigen Stromleitungen schmalbandige Störer und lineare Kanalverzerrungen auftreten können, die mit der Mehrträgerübertragung relativ gut korrigiert werden können. Allerdings ist die notwendige Fehlerkorrektur mittels Kanalcodierung, um die Informationen der beeinträchtigten Teilkanäle wiederzugewinnen, sehr aufwendig.

Um eine schnelle und zuverlässige Informationsübertragung zu gewährleisten, besteht bei der Mehrträgerübertragung die Möglichkeit, den einzelnen Teilkanälen unabhängig voneinander eine individuelle Modulationsrate (Teilrate) und Sendeleistung (Teilleistung) als Teil der gesamten Datenrate und Sendeleistung zuzuweisen. Damit kann sinnvollerweise auf stark gestörten oder gedämpften Teilkanälen mit einer kleinerer Teilrate bzw. Teilleistung übertragen werden als auf weniger beeinträchtigten. Eine aufwendige Fehlerkorrektur mittels Kanalcodierung kann somit umgangen oder im Aufwand reduziert werden.

Die mittlere Informationsmenge des komplexen Symbols, das auf den i-ten Teilkanal moduliert wird, nennt man die (Modulations-) Teilrate **R(i).** Die gesamte Datenrate, genauer der mittlere Informationsgehalt **R$_{ges}$** des gesamten Symbols (bspw. OFDM-Symbols) aller **N** Teilkanäle, ergibt sich demnach als Summe der einzelnen Teilraten:

$$R_{ges} = \sum_{i=0}^{N-1} R(i) \qquad . \tag{1}$$

Darüber hinaus ergibt sich die gesamte Sendeleistung, genauer die mittlere Sendeleistung **S$_{ges}$** des gesamten Symbols als Addition der Teilleistungen **S(i)** der Teilkanäle

$$S_{ges} = \sum_{i=0}^{N-1} S(i) \qquad . \tag{2}$$

Die theoretisch optimale Leistungsaufteilung zur Maximierung der Kanalkapazität ist unter dem Namen "Water-Filling Regel" bekannt und z.B. in J.G.Proakis: "Digital Communications", McGraw-Hill, 3. Auflage, 1995 auf den Seiten 687-688 beschrieben. Dabei wird die Sendeleistung so gewählt, daß sich Signal- und Störleistung zu einer Konstanten ergänzen. Für eine maximale Übertragungsrate werden dann die Teilraten **R(i) = Δf·log$_2$(1+SNR(i))** gleich der Kanalkapazitäten der Teilkanäle gewählt, wobei Δ**f** und **SNR(i)** der Bandbreite bzw. dem Signalrauschleistungsverhältnis (engl.: "Signal-to-Noise Ratio"; Abk.: SNR) des i-ten Teilkanals entsprechen. Nachteilig ist jedoch die große Komplexität bei der Berechnung der Leistungsaufteilung und daß im allgemeinen keine ganzzahligen Teilraten zustandekommen.

Aus diesen Gründen wurde zur geeigneten Raten- und Leistungsaufteilung eine Vielzahl von z.T. suboptimalen Verfahren entwickelt, die technisch einfacher realisierbar sind:

[Hughes-Hartogs]

Aus US 4,679,227 ist ein Verfahren bekannt, bei dem zunächst die Störleistungen der Teilkanäle geschätzt werden. Danach wird für jeden Teilkanal eine Reihe von Sendeleistungen bestimmt, die nötig sind, um in diesem Teilkanal mit einer Reihe möglicher Teilraten bei einer vorgegebenen Fehlerwahrscheinlichkeit zu übertragen. Anschließend werden die "inkrementellen Leistungen" ermittelt, die angeben, welche Leistung jedem Teilkanal mit einer bestimmten Teilrate nötig ist, um die nächst höhere Teilrate bei gleichbleibender Fehlerrate zu erreichen. Diese inkrementellen Leistungen werden in einer Matrix angeordnet. In dieser Matrix wird dann sukzessive das kleinste Element gesucht - das dann gestrichen wird - bis ein Abbruchkriterium erfüllt ist. Dieses Abbruchkriterium kann zum einen das Erreichen einer vorgegebenen Gesamtrate sein oder das Überschreiten einer maximal zulässigen Sendeleistung.

[Cioffi et al.]

Nach US 5,479,447, das sich auf die Übertragung über Teilnehmeranschlußleitungen bezieht, wird zunächst das SNR in jedem Teilkanal geschätzt, wobei eine gleichverteilte Sendeleistung zugrunde gelegt wird. Danach werden die Werte **SNR/$\Gamma$** in absteigender Reihenfolge sortiert. Der vorgegebene Parameter $\Gamma$ wird nach amerikanischem Sprachgebrauch "SNR Gap" genannt. Durch diesen Parameter wird der Verlust an Leistungseffizienz, den ein reales Übertragungssystem verglichen mit dem theoretischen Optimum aufweist, berücksichtigt. In einer Schleife wird anschließend jedem Teilkanal **i** mit Hilfe der Beziehung **$R(i)=\log_2(1+SNR(i)/\Gamma)$** eine Teilrate zugewiesen. Bei dieser Zuweisung wird zwischen einer gleichverteilten Sendeleistung und einer maximal zulässigen Teilleistung bzgl. eines vorgegebenen Toleranzschemas unterschieden. Aus diesen beiden Möglichkeiten wird diejenige Variante gewählt, die die kleinere Teilrate ergibt. Im nächsten Schritt wird die Gesamtleistung so auf die Teilkanäle verteilt, daß sich für alle Teilkanäle die gleiche Fehlerwahrscheinlichkeit ergibt. Abschließend wird noch eine letzte Leistungsskalierung durchgeführt.

[Hyll]

Ferner werden in der Druckschrift WO 99/16224 die Standardabweichung des Störsignals jedes einzelnen Teilkanals ermittelt, mit vorgegebenen Schwellenwerten verglichen und anhand des Ergebnisses mittels Tabellenzugriffs die Rate des Teilkanals ermittelt. Eine Leistungsaufteilung wird nicht vorgenommen.

[Fischer et al.]

Aus DE 19607207 A1 ist ferner ein Verfahren bekannt, das die Ratenaufteilung hinsichtlich der minimalen quadratischen Euklidischen Distanz zwischen Zuständen von QAM-Symbolen vornimmt statt hinsichtlich der Kanalkapazität. Dabei wird bei konstanter Gesamtleistung eine feste vorgegebene Gesamtrate optimal auf die einzelnen Teilkanäle aufgeteilt.

Der Erfindung liegt die Aufgabe zugrunde, ein Verfahren und eine Vorrichtung zur Datenübertragung über ein Stromversorgungsnetz anzugeben, die relativ einfach sind und einen zur Verfügung stehenden Übertragungskanal effizient nutzen.

Die Lösung dieser Aufgabe gelingt mit dem Verfahren nach Anspruch 1 und der Vorrichtung nach Anspruch 9.

Die Erfindung unterteilt den Übertragungskanal in mehrere Teilkanäle und maximiert die gesamte Datenrate durch Optimierung der jeweiligen Datenraten (Teilraten) und Sendeleistungen (Teilleistungen) der Teilkanäle entsprechend ihrem jeweiligen Signalrauschleistungsverhältnis und unter Beibehaltung einer vorgegebenen Übertragungsfehlerrate sowie der Gesamtsendeleistung aller Teilkanäle.

Zur Vereinfachung der Datenübertragung trägt dabei die Quantisierung der jeweiligen Teilraten auf ganzzahlige Werte bei. Dies bedeutet, daß innerhalb einer vorgegebenen Zeiteinheit auf allen Teilkanälen jeweils ganzzahlige Mengen an Datenbits übertragen werden. Dadurch vereinfacht sich die Aufteilung des zu übertragenden Datenstroms auf die einzelnen Teilkanäle.

Die Quantisierung bewirkt allerdings eine Abweichung der Teilrate von der bei vorgegebener Übertragungsfehlerrate und Teilleistung abhängig vom jeweiligen Signalrauschleistungsverhältnis zunächst berechneten Teilrate eines Teilkanals. Ohne weitere Maßnahmen würde diese Abweichung zu einer Änderung der Übertragungsfehlerrate führen. Um dies zu vermeiden, wird die Teilleistung so angepaßt, daß sich trotz der Quantisierung die Übertragungsfehlerrate nicht ändert.

Wenn beispielsweise die Quantisierung zu einer Verringerung oder einem Abrunden der Teilrate auf einen ganzzahligen Wert führt, so wird auch die Teilleistung entsprechend verringert, um die Übertragungsfehlerrate gleich zu lassen.

Um die Gesamtsendeleistung trotz dieser Maßnahmen auf dem vorbestimmten Wert zu halten, werden dann die Teilleistungen anderer Teilkanäle entsprechend angepaßt. Und die Signalrauschleistungsverhältnisse der anderen Teilkanäle werden den geänderten Teilleistungen entsprechend neu bestimmt, damit für diese Teilkanäle ebenfalls eine optimale Teilrate berechnet werden kann.

Wenn in dem genannten Beispiel also die Teilleistung des zuerst betrachteten Teilkanals aufgrund der Quantisierung herabgesetzt wird, so werden die Teilleistungen anderer Teilkanäle entsprechend heraufgesetzt und deren Signalrauschleistungsverhältnisse erhöhen sich. Wenn für diese Teilkanäle dann ebenfalls ihre Teilrate festgelegt wird, so ist sie entsprechend höher als ohne die Anpassungen. Dadurch erreicht die Erfindung eine Optimierung der gesamten Datenrate.

Die Erfindung erlaubt es, die Fehlerrate dem von der Datenübertragung bereitgestellten Dienst entsprechend vorzugeben. So tolerieren Sprachdienste höhere Fehlerraten als andere Datenübertragungsdienste. Wenn außerdem eine Fehlerkorrekturtechnik angewendet wird, so kann die Übertragungsfehlerrate so vorgegeben werden, daß die Übertragungsfehler von der verwendeten Technik korrigiert werden können.

Die Unteransprüche betreffen bevorzugte Ausführungsformen der Erfindung.

So betreffen die Ansprüche 2 bis 4 Ausgestaltungen, die sich besonders einfach auf einem digitalen Signalprozessor realisieren lassen.

Anspruch 5 betrifft eine besonders zweckmäßige Maßnahme zur Bestimmung des zu Beginn des Verfahrens für jeden Teilkanal festgelegten Signalrauschleistungsverhältnisses.

Die Aufteilung des zu übertragenden Datenstroms auf die Teilkanäle sowie die Anwendung von Verfahren zur Korrektur fehlerhaft übertragener Daten lassen sich erheblich vereinfachen, wenn wie in Anspruch 6 angegeben, die Übertragungsfehlerrate für jeden Teilkanal gleich ist.

In Zeiträumen von Sekunden oder Minuten können sich die Übertragungsverhältnisse auf einem Stromversorgungsnetz ändern, wenn beispielsweise Verbraucher hinzu- oder abgeschaltet werden. Dadurch ändern sich die Signalrauschleistungsverhältnisse der einzelnen Teilkanäle. Daher werden die Signalrauschleistungsverhältnisse vorzugsweise jeweils nach etwa 0,5 Sekunden bis 30 Minuten neu gewonnen und die Schritte a) bis c) für die einzelnen Teilkanäle erneut durchgeführt. Effizienter ist es jedoch, wenn dies nicht nach einer festen Zeitspanne sondern wie in Anspruch 7 angegeben dann erfolgt, wenn im Laufe der Datenübertragung festgestellt wird, daß die tatsächliche Übertragungsfehlerrate bei einem oder mehreren Teilkanälen von der vorgegebenen Übertragungsfehlerrate um einen bestimmten Betrag abweicht. Noch effizienter ist es, wenn die erneute Gewinnung des Signal-rauschleistungsverhältnisses und die erneute Durchführung der Schritte (a) bis (c) nur für die jeweils von der Abweichung der Übertragungsfehlerrate betroffenen Teilkanäle durchgeführt wird.

Eine zweckmäßige Modulationsart zur Übertragung der Teilraten auf den einzelnen Teilkanälen ist die in Anspruch 8 angegebene Quadraturamplitudenmodulation.

Ein Ausführungsbeispiel der Erfindung wird im folgenden anhand der Zeichnungen erläutert. Darin zeigt:

**Figur 1** Schematisch ein System zur Datenübertragung über ein Stromversorgungsnetz,
**Figur 2** Diagramme zur Erläuterung der Quadraturamplitudenmodulation, und
**Figur 3** ein Flußdiagramm zur Optimierung der Datenübertragungsrate.

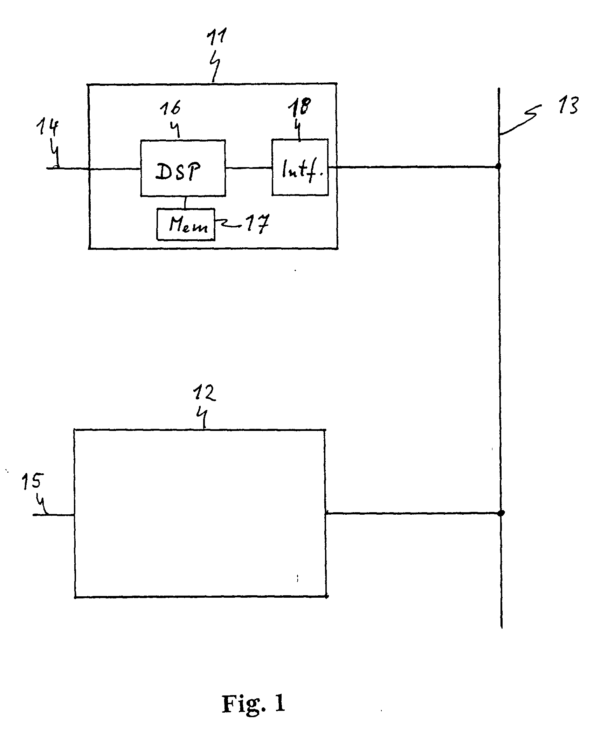

Das in Figur 1 dargestellte System beinhaltet zwei Modems 11, 12, die jeweils Daten an ihrem anwendungsseitigen Anschluß 14, 15 entgegennehmen und in Form von modulierten Signalen über das Stromversorgungsnetz 13 aussenden und wiederum Signale vom Stromversorgungsnetz 13 empfangen, demodulieren und darin enthaltene Daten an den anwendungsseitigen Anschlüssen 14, 15 ausgeben. Jedes Modem 11, 12 enthält einen digitalen Signalprozessor 16, der die modulierten Signale auf dem Stromversorgungsnetz 13 und die Daten am anwendungsseitigen Anschluß 14, 15 ineinander umsetzt und nach Daten und einem Programm arbeitet, die in einem Speicher 17 abgelegt sind. Der digitale Signalprozessor ist mit einem Interface 18 versehen, das die modulierten Signale vom und zum Stromversorgungsnetz 13 überträgt, den digitalen Signalprozessor 16 aber von den Netzspannungen trennt.

Die Datenübertragung auf dem Stromversorgungsnetz 13 geschieht mittels einer Mehrträgertechnik innerhalb eines Übertragungskanals. Innerhalb des Frequenzbereichs des Übertragungskanals werden mehrere Trägersignale ausgesandt, die jeweils in Quadraturamplitudenmodulation (QAM) mit den zu übertragenden Daten moduliert werden und je einen Teilkanal bilden.

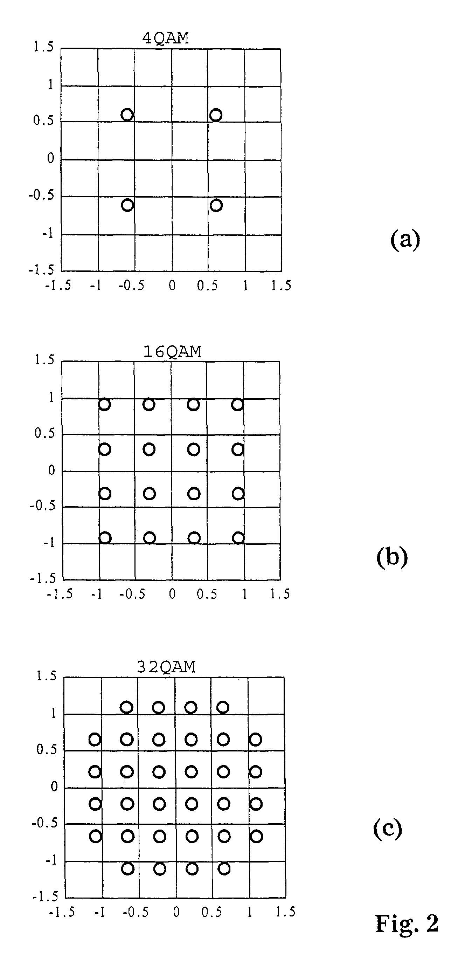

Verschiedene Quadraturamplitudenmodulationen unterschiedlicher Mächtigkeit sind in den Figuren 2(a) bis (c) dargestellt. Die Figuren zeigen jeweils die durch Amplitude und Phase des Trägersignals in der komplexen Ebene möglichen Signalzustände. Bei 4 QAM, also vier möglichen Signalzuständen gemäß Figur 2(a), läßt sich innerhalb einer Zeiteinheit, beispielsweise innerhalb von 5,33 ms, ein 2-Bit-Symbol übertragen. Entsprechenderweise läßt sich bei 16 QAM bzw. 32 QAM gemäß Figur 2(b) bzw. (c) jeweils ein 4-Bit- bzw. 5-Bit-Symbol übertragen. Unter der Annahme, daß alle Signalzustände innerhalb einer der Figuren 2(a) bis (c) gleich häufig sind, geben die Figuren die gleiche mittlere Sendeleistung wieder.

Der digitale Signalprozessor 16 arbeitet so, daß Teilkanälen mit geringem Signalrauschleistungsverhältnis eine geringe Datenrate (Teilrate), beispielsweise zwei Bit pro Zeiteinheit, entsprechend 4 QAM, und Teilkanälen mit höherem Signalrauschleistungsverhältnis höhere Datenraten (Teilraten) wie beispielsweise vier Bit pro Zeiteinheit oder fünf Bit pro Zeiteinheit, entsprechend 16 QAM oder 32 QAM zugeordnet werden. Im Folgenden wird das Verfahren für diese Zuordnung erläutert:

Die Modulationsrate jedes Teilkanals wird mit Teilrate **R(i)** bezeichnet. Der relative Anteil des i-ten von N Teilkanälen an der Gesamtleistung $S_{ges}$ - also die Leistungsaufteilung - wird mit der Variablen **PDF(i)**, engl.: "Power Distribution Function", bezeichnet. Der i-te Teilkanal besitzt also die absolute Teilleistung $S(i) = S_{ges} \cdot PDF(i)$. Selbstverständlich gilt:

$$\sum_{i=0}^{N-1} PDF(i) = 1 \qquad . \qquad (3)$$

Die Raten- und Leistungsaufteilung bei vorgegebener Gesamtsendeleistung und vorgegebener gleicher Fehlerrate aller Teilkanäle erfolgt in folgenden Schritten:

1) In jedem der **N** Teilkanäle wird das Signalrauschleistungsverhältnis **SNR** geschätzt, wobei hierfür von einer für alle verwendeten Teilkanäle gleichen Teilleistung $S_{ges}/N$ bzw. Leistungsaufteilung **PDF=1/N** ausgegangen wird. Die Schätzung wird unten ausführlicher erläutert.

2) Die Werte der Signalrauschleistungsverhältnisse SNR werden in absteigender Reihenfolge sortiert und in einer SNR-Liste abgelegt. Zusätzlich wird auch die Zuordnung der sortierten SNR-Werte zu den entsprechenden Teilkanälen derart gespeichert, daß eine mit dem Sortieren verbundene Umsortierung der Teilkanäle rückgängig gemacht werden kann.

3) Die Raten- und Leistungsaufteilung geschieht im Rahmen einer Schleife über alle **N** Elemente der sortierten SNR-Liste. Die Schleifenvariable **i** durchläuft die Werte **N-1,...,0;** beginnend mit dem letzten Element der sortierten SNR-Liste, also dem Teilkanal mit dem kleinsten SNR-Wert:

a) Dem betrachteten i-ten Teilkanal wird gemäß seinem SNR-Wert die Teilrate

$$R(i) = \log_2\left(1 + \frac{SNR(i)}{\Gamma}\right) \qquad (4)$$

zugewiesen, wobei $\Gamma$ eine Konstante ist, die eine vorgegebene Fehlerrate ausdrückt.

b) Danach wird diese Teilrate zu einem naheliegenden ganzzahligen Wert $R_Q$ quantisiert:

$$R_Q(i) = \begin{cases} R_{max} & R(i) \geq R_{max} \\ \lfloor R(i) \rfloor & \text{sonst} \\ 0 & R(i) < 2 \end{cases} \qquad , \qquad (5)$$

wobei auf einem belegten Teilkanal mindestens mit 4 QAM, d.h. der Teilrate Zwei und höchstens mit einer vorgegebenen maximalen Teilrate $R_{max}$ übertragen wird und der Operator [**x**] die größte ganze Zahl, die kleiner oder gleich **x** ist, bezeichnet. Die Quantisierung kann also zu einer Verringerung der Teilrate führen.

c) Eine Verringerung der Teilrate durch die Quantisierung würde ohne weitere Maßnahmen zu einer geringeren Fehlerrate des betrachteten Teilkanals führen. Um die vorgegebene Fehlerrate jedoch beizubehalten, wird, falls **i>0** gilt, die Teilsendeleistung $S(i)$ so angepaßt, daß die Auswirkung der Ratenquantisierung auf die Fehlerrate kompensiert wird. Dazu wird der Anteil des i-ten Teilkanals an der Gesamtleistung reduziert. Der Betrag der Reduzierung wird zu gleichen Teilen den verbleibenden, noch nicht betrachteten Teilkanälen **j=0,...,i-1** der SNR-Liste, also den Teilkanälen mit höherem SNR zugeschlagen, um die Gesamtleistung beizubehalten. Deren SNR-Werte - die ja zunächst unter der Prämisse einer ursprünglich gleichförmigen Aufteilung der gesamten Sendeleistung auf die Teilkanäle ermittelt wurden - werden um den gleichen Faktor erhöht, um den sich ihre jeweilige Teilleistung erhöht, damit diesen Teilkanälen in den später folgenden Schleifendurchläufen dann eine entsprechend höhere Teilrate zugewiesen und die gesamte Datenrate des Übertragungskanals maximiert werden kann. Die Anpassung der Leistungsaufteilung und SNR-Werte geschieht zweckmäßigerweise in den folgenden Unterschritten:

i) Zunächst wird die Hilfsgröße

$$\Delta = 1 - \frac{2^{R_Q(i)} - 1}{2^{R(i)} - 1} \tag{6}$$

berechnet.

ii) Danach wird vorbereitet, daß der Anteil des betrachteten i-ten Teilkanals an der Gesamtleistung um $\Delta \cdot$ **PDF(i)** reduziert werden soll. Da diese gewonnene Leistung zu gleichen Teilen auf alle verbleibenden Teilkanäle aufgeteilt werden soll, werden deren SNR-Werte an die veränderte Leistungsaufteilung angepaßt:

$$SNR(j) := SNR(j) + SNR(j) \cdot \Delta \cdot PDF(i) / \big( i \cdot PDF(j) \big) \quad \text{für} \quad j = 0,...,i-1. \tag{7}$$

iii) Schließlich wird die neue Leistungsaufteilung vorgenommen:

$$PDF(j) := \begin{cases} PDF(i) - \Delta \cdot PDF(i) & j = i \\ PDF(j) + \Delta \cdot PDF(i)/i & \text{sonst} \end{cases} \quad \text{für} \quad j = 0,...,i. \tag{8}$$

d) Falls **i>0** gilt, wird der Schleifenzähler dekrementiert, d.h. um Eins reduziert und bei Schritt 3a) fortgefahren.

4) Abschließend wird die in den Schritten 3a) bis c) ermittelte und in der sortierten SNR-Liste aufgezeichnete Raten- und Leistungsaufteilung unter Bezugnahme auf die in Schritt 2) gespeicherte Zuordnung wieder den Teilkanälen in ihrer ursprünglichen Anordnung zugewiesen.

Im Ergebnis bewirkt dieses Verfahren bei jeder mit der Quantisierung verbundenen Verringerung der Teilrate eines Teilkanals eine Erhöhung der Teilleistung, des Signalrauschleistungsverhältnisses und damit der Teilrate aller in der Liste enthaltenen Teilkanäle mit besserem Signalrauschleistungsverhältnis. Dadurch wird die gesamte Datenrate des Übertragungskanals maximiert.

Zur Schätzung der Signalrauschleistungsverhältnisse SNR im obige Schritt 1) sendet ein Modem 11, 12 über jeden der **N** Teilkanäle **n**-mal den gleichen Signalzustand. Der Signalzustand entspricht irgendeinem Punkt mit komplexen Koordinaten in den Diagrammen der Figuren 2(a) bis (c). In einem anderen Modem 11, 12, das die ausgesandten Signale über den Übertragungskanal empfängt, wird aus den **n** empfangenen Signalzuständen, die wiederum Punkten mit den komplexen Koordinaten **Y(k)** (**k = 0,...,n-1**) entsprechen, für jeden Teilkanal der komplexe Mittelwert $\hat{m}_Y$ und die Varianz $\hat{\sigma}_Y^2$ geschätzt:

$$\hat{\sigma}_Y^2 = \frac{1}{n-1} \sum_{k=0}^{n-1} \left| Y(k) - \hat{m}_Y \right|^2 \quad \text{und} \quad \hat{m}_Y = \frac{1}{n} \sum_{k=0}^{n-1} Y(k). \tag{9}$$

Solche Schätzer nennt man "erwartungstreue Punktschätzer". Sie werden z.B. in Papoulis: "Probability, Random Variables and Stochastic Processes", McGraw-Hill, 3rd Edition, 1991 beschrieben. Vorzugsweise geschieht die Berechnung der Gleichung (9) für alle Teilkanäle parallel im digitalen Signalprozessor 16, wobei ein iteratives Verfahren zum Einsatz kommt bei dem die Mittelwertbildung durch eine gleitende Mittelung ersetzt wird. Die gleitende Mittelung bietet den Vorteil, daß für jeden Teilkanal jeweils nur die aktuellen Schätzwerte für den Mittelwert und die Varianz gespeichert werden müssen und nicht sämtliche Empfangspunkte. Für jeden der **N** Teilkanäle wird schließlich das Signalrauschleistungsverhältnis wie folgt ermittelt:

$$SNR = \frac{|\hat{m}_Y|^2}{\hat{\sigma}_Y^2}. \tag{10}$$

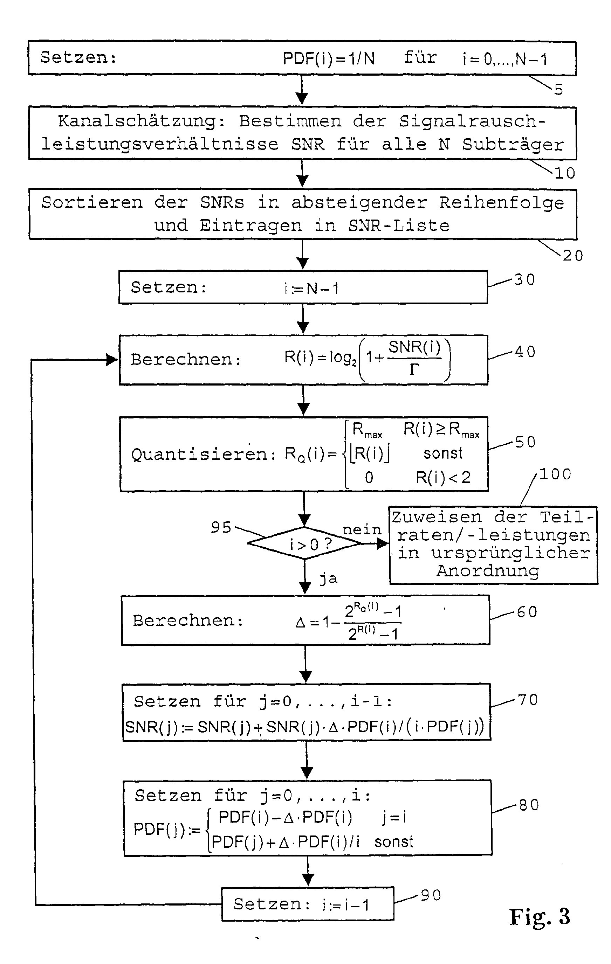

Bezugnehmend auf Fig. 3 wird das Ausführungsbeispiel nachfolgend nochmals zusammengefaßt:

Nachdem in Schritt 5 die Sendeleistung gleichverteilt festgesetzt und in Schritt 10 das Signalrauschleistungsverhältnis **SNR** für jeden der **N** Teilkanäle geschätzt wurde, werden die SNR-Werte in Schritt 20 in absteigender Reihenfolge sortiert in eine SNR-Liste eingetragen. Der Zusammenhang zwischen der sortierten Anordnung und der ursprüngliche Reihenfolge wird derart abgelegt, daß eine Umkehrung der Sortierung möglich ist. Sortiert wird mit einem konventionellen Sortieralgorithmus. Danach wird eine Schleife über alle Elemente der sortierten SNR-Liste durchlaufen. Der Schleifenzähler **i** bezeichnet die Nummer des jeweils betrachteten Elements in der SNR-Liste. Beginnend in Schritt 30 mit dem letzten Element der SNR-Liste, also dem Schleifenzähler **i:=N-1**, wird in jedem Durchlauf die Teilrate **R(i)** berechnet (Schritt 40) und quantisiert (Schritt 50). Darüber hinaus wird mittels der in Schritt 60 berechneten Hilfsgröße $\Delta$ die Auswirkung der Ratenquantisierung durch Anpassung der Signalrauschleistungsverhältnisse in Schritt 70 und der Teilleistungen in Schritt 80 kompensiert, wobei die Fehlerrate unverändert bleibt. Nach jeder Iteration wird der Schleifenzähler in Schritt 90 dekrementiert. Mittels der Abfrage 95 wird geprüft, ob die Schleife bei dem letzten Teilkanal angekommen ist. Ist dies der Fall, so werden die ermittelten Teilraten und -leistungen den Teilkanälen in ihrer ursprünglichen Anordnung zugewiesen (Schritt 100).

Der Ablauf nach Figur 3 soll nun noch anhand eines Zahlenbeispiels erläutert werden:

Es wird von folgenden Parametern ausgegangen: **N = 3** und $\Gamma$ **= 10**. Begonnen wird mit einer gleichförmigen Leistungsaufteilung in Schritt 5:

| **i** | 0 | 1 | 2 |
|-------|-----|-----|-----|
| PDF(i) | 1/3 | 1/3 | 1/3 |

Desweiteren sei angenommen, die Kanalschätzung in Schritt 10 habe das folgende Ergebnis erbracht:

| | Teilkanal Nr.1 | Teilkanal Nr.2 | Teilkanal Nr.3 |
|---|---|---|---|
| SNR | 100 | 10 | 1000 |

In Schritt 20 werden die SNR-Werte dann absteigend sortiert in die SNR-Liste eingetragen:

| **i** | 0 | 1 | 2 |
|-------|------|-----|-----|
| SNR | 1000 | 100 | 10 |

In Schritt 30 wird der Schleifendurchlauf mit demjenigen Teilkanal begonnen, der den geringste SNR-Wert aufweist:

$$i=N-1=2$$

Für diesen Teilkanal wird die Teilrate in Schritt 40 berechnet:

$$R(2) = \log_2\left(1+\frac{10}{10}\right) = 1$$

Die Quantisierung der Teilrate in Schritt 50 ergibt

$$R_Q(2)=0,$$

d.h. dieser Teilkanal wird nicht verwendet: $\Delta$**=1** (Schritt 60). Somit wird seine Teilleistung auf die verbleibenden Teilkanäle aufgeteilt, was sich in einer Veränderung der SNR-Liste (Schritt 70)

| i | 0 | 1 |
|---|---|---|
| SNR | 1500 | 150 |

und einer neuen Leistungverteilung (Schritt 80) ausdrückt:

| i | 0 | 1 | 2 |
|---|---|---|---|
| PDF(i) | 1/2 | 1/2 | 0 |

Nach Beendigung des ersten Schleifendurchlaufs wird der Schleifenzähler dekrementiert (Schritt 90):

$$i:=i-1=1$$

Im nächsten Durchlauf der Schritte 40 und 50 werden die Teilrate

$$R(1) = \log_2\left(1+\frac{150}{10}\right) = 4$$

und deren Quantisierte $R_Q(1) = 4$ ermittelt. Da diese übereinstimmen, liegt ein Sonderfall vor, in dem sich keine Neuverteilung der Leistung ergibt: $\Delta=0$, d.h. die Ausführung der Schritte 70 u. 80 ändert die SNR-Liste bzw. PDF-Werte nicht.

Auch nach dieser Iteration wird der Schleifenzähler in Schritt 90 wieder dekrementiert: $i:=i-1=0$.

Im letzten Durchlauf erhält man in Schritt 40

$$R(0) = \log_2\left(1+\frac{1500}{10}\right) \approx 7,2$$

und somit in Schritt 50 $R_Q(0)=7$. Bei dem letzten Teilkanal erübrigt sich eine Neuaufteilung der Leistung, da keine verbleibenden Teilkanäle mehr zur Verfügung stehen. Die Verzweigung 95 führt demnach zur Abschlußoperation 100, die darin besteht, den einzelnen Teilkanälen in ihrer ursprünglichen Anordnung die ermittelte Raten- und Leistungsaufteilung zuzuweisen:

|  | Teilkanal Nr.1 | Teilkanal Nr.2 | Teilkanal Nr.3 |
|---|---|---|---|
| $R_Q$ | 4 | 0 | 7 |
| PDF | 1/2 | 0 | 1/2 |

**Patentansprüche**

1. Verfahren zur Datenübertragung über ein Stromversorgungsnetz, bei dem der verwendete Übertragungskanal in mehrere Teilkanäle unterteilt ist, denen jeweils eine Teilleistung als eigener Teil einer vorgegebenen gesamten Sendeleistung und eine Teilrate als eigene Datenrate zugewiesen wird,

wobei anfänglich für jeden Teilkanal eine Teilleistung festgelegt und ein Signalrauschleistungsverhältnis gewonnen wird und die Teilkanäle dann nacheinander betrachtet und jeweils die folgenden Schritte durchgeführt werden:

(a) Berechnen der Teilrate des betrachteten Teilkanals abhängig von dessen Signalrauschleistungsverhältnis, so daß sich eine vorgegebene Übertragungsfehlerrate ergibt,
(b) Quantisieren der berechneten Teilrate, und
(c) Anpassen der Teilleistung des betrachteten Teilkanals an eine durch die Quantisierung veränderte Teilrate, so daß die vorgegebene Übertragungsfehlerrate für den betrachteten Teilkanal beibehalten wird, Neufestlegen der Teilleistung eines anderen Teilkanals im Hinblick auf die angepaßte Teilleistung des betrachteten Teilkanals, so daß die vorgegebene gesamte Sendeleistung aller Teilkanäle beibehalten wird, und Bestimmen eines an die neu festgelegte Teilleistung angepaßten Signalrauschleistungsverhältnisses des anderen Teilkanals.

2. Verfahren nach Anspruch 1, wobei die Teilkanäle angefangen von dem mit dem niedrigsten Signalrauschleistungsverhältnis bis zu dem mit dem höchsten Signalrauschleistungsverhältnis der Reihe nach betrachtet und jeweils die Schritte (a) bis (c) ausgeführt werden,

die Quantisierung in Schritt (b) ein Herabsetzen der Teilrate des betrachteten Teilkanals auf einen ganzzahligen Wert beinhaltet, und
die Teilleistung des betrachteten Teilkanals in Schritt (c) verringert und die Teilleistung sowie das Signalrauschleistungsverhältnis derjenigen anderen Teilkanäle entsprechend erhöht werden, die jeweils noch nicht betrachtet wurden.

3. Verfahren nach Anspruch 1, wobei die Teilkanäle angefangen von dem mit dem höchsten Signalrauschleistungsverhältnis bis zu dem mit dem niedrigsten Signalrauschleistungsverhältnis der Reihe nach betrachtet und jeweils die Schritte (a) bis (c) ausgeführt werden,

die Quantisierung in Schritt (b) ein Heraufsetzen der Teilrate des betrachteten Teilkanals auf einen ganzzahligen Wert beinhaltet, und
die Teilleistung des betrachteten Teilkanals in Schritt (c) erhöht und die Teilleistung und das Signalrauschleistungsverhältnis derjenigen anderen Teilkanäle entsprechend verringert wird, die jeweils noch nicht betrachtet wurden.

4. Verfahren nach einem der Ansprüche 1 bis 3, wobei die Teilkanäle entsprechend ihrem Signalrauschleistungsverhältnis in absteigender Reihenfolge sortiert in eine in einem Speicher (17) gespeicherte Tabelle eingetragen werden.

5. Verfahren nach einem der Ansprüche 1 bis 4, wobei die anfänglich festgelegte Teilleistung für jeden Teilkanal gleich ist und, um anfänglich das Signalrauschleistungsverhältnis für jeden Teilkanal zu gewinnen, auf jedem Teilkanal wiederholt mit gleicher Teilleistung ein Signal gesendet wird, das Signal empfangen wird, für jede Wiederholung die Abweichung des empfangenen Signals von dem gesendeten Signal gemessen wird und das Signalrauschleistungsverhältnis aus der gemittelten Abweichung berechnet wird.

6. Verfahren nach einem der Ansprüche 1 bis 5, wobei die vorgegebene Übertragungsfehlerrate für alle Teilkanäle gleich ist.

7. Verfahren nach einem der Ansprüche 1 bis 6, wobei anschließend Anwendungsdaten übertragen werden und dabei wiederholt die tatsächliche Übertragungsfehlerrate gemessen wird und bei Überschreitung einer bestimmten Abweichung der gemessenen Übertragungsfehlerrate von der vorgegebenen Übertragungsfehlerrate das Signalrauschleistungsverhältnis erneut für jeden Teilkanal gewonnen und die Schritte (a) bis (c) erneut für jeden Teilkanal ausgeführt werden.

8. Verfahren nach einem der Ansprüche 1 bis 7, wobei die Datenübertragung auf den einzelnen Teilkanälen durch Quadraturamplitudenmodulation erfolgt.

9. Vorrichtung zur Datenübertragung über ein Stromversorgungsnetz, bei der der verwendete Übertragungskanal in mehrere Teilkanäle unterteilt ist, denen jeweils eine Teilleistung als eigener Teil einer vorgegebenen gesamten Sendeleistung und eine Teilrate als eigene Datenrate zugewiesen ist, aufweisend:
eine Einrichtung (16, 17), um für jeden Teilkanal anfänglich eine Teilleistung festzulegen und ein Signalrauschleistungsverhältnis zu gewinnen und die Teilkanäle dann nacheinander mittels der folgenden Einrichtungen zu betrachten:

einer Einrichtung (16) zum Berechnen der Teilrate des betrachteten Teilkanals abhängig von dessen Signalrauschleistungsverhältnis, so daß sich eine vorgegebene Übertragungsfehlerrate ergibt,
einer Einrichtung (16) zum Quantisieren der berechneten Teilrate, und
einer Einrichtung (16) zum Anpassen der Teilleistung des betrachteten Teilkanals an eine durch die Quantisierung veränderte Teilrate, so daß die vorgegebene Übertragungsfehlerrate für den betrachteten Teilkanal beibehalten wird, und zum Neufestlegen der Teilleistung eines anderen Teilkanals im Hinblick auf die angepaßte Teilleistung des betrachteten Teilkanals, so daß die vorgegebene gesamte Sendeleistung aller Teilkanäle beibehalten wird, und zum Bestimmen eines an die neu festgelegte Teilleistung angepaßten Signal-rauschleistungsverhältnisses des anderen Teilkanals.

11

16

18

14

DSP

Intf.

Mem — 17

13

12

15

Fig. 1

Fig. 2

Setzen: $\qquad$ PDF(i) = 1/N $\qquad$ für $\qquad$ i = 0,...,N−1 $\qquad$ 5

Kanalschätzung: Bestimmen der Signalrauschleistungsverhältnisse SNR für alle N Subträger $\qquad$ 10

Sortieren der SNRs in absteigender Reihenfolge
und Eintragen in SNR-Liste $\qquad$ 20

Setzen: $\qquad$ i := N−1 $\qquad$ 30

Berechnen: $\qquad$ $R(i) = \log_2\left(1 + \dfrac{SNR(i)}{\Gamma}\right)$ $\qquad$ 40

Quantisieren: $R_Q(i) = \begin{cases} R_{max} & R(i) \geq R_{max} \\ \lfloor R(i) \rfloor & \text{sonst} \\ 0 & R(i) < 2 \end{cases}$ $\qquad$ 50

95 — $i > 0$ ? — **nein** → Zuweisen der Teil-
raten/-leistungen
in ursprünglicher
Anordnung $\qquad$ 100

**ja**

Berechnen: $\qquad$ $\Delta = 1 - \dfrac{2^{R_Q(i)} - 1}{2^{R(i)} - 1}$ $\qquad$ 60

Setzen für j = 0,...,i−1:
$SNR(j) := SNR(j) + SNR(j) \cdot \Delta \cdot PDF(i)/(i \cdot PDF(j))$ $\qquad$ 70

Setzen für j = 0,...,i:
$PDF(j) := \begin{cases} PDF(i) - \Delta \cdot PDF(i) & j = i \\ PDF(j) + \Delta \cdot PDF(i)/i & \text{sonst} \end{cases}$ $\qquad$ 80

Setzen: i := i−1 $\qquad$ 90

**Fig. 3**